# EUROPÄISCHE PATENTANMELDUNG

(11) **EP 0 647 550 A1**
(43) Veröffentlichungstag der Anmeldung: **12.04.1995**
(21) Anmeldenummer: 94112716.9
(22) Anmeldetag: 16.08.1994
(51) Int. Cl.: B60R 25/10

(54) **Anordnung zur Überwachung eines Raumes**

(30) Priorität: 07.10.1993 DE 4334179
(71) Anmelder: ROBERT BOSCH GMBH, 70442 Stuttgart (DE)
(72) Erfinder: Meyer-Staufenbiel, Torsten, Ing., D-71254 Ditzingen (DE); Engelke, Claus, Dipl.-Ing., D-70195 Stuttgart (DE)

(57) **Zusammenfassung**

Vorgeschlagen wir eine Anordnung zur Überwachung eines zumindest eine Scheibe aufweisenden Raumes, insbesondere eines Innenraumes. Ihre Hauptbestandteile sind wenigstens zwei Ultraschallsensoren (1, 1') zum Empfang von bei einem Glasbruch entstehenden Signalen, von denen wenigstens einer wahlweise als Ultraschallsensor (1) betreibbar ist. Nach dem Umschalten eines ersten Ultraschallsensors (1, 1') auf Sendebetrieb wird wenigstens ein anderer Ultraschallsensor (1, 1') als Empfänger (1') zum Empfang der von dem auf Sendebetrieb geschalteten Ultraschallsensor (1) ausgehenden Ultraschallsignale betrieben.

Das Umschalten eines Sensors (1, 1') von Empfangs- auf Sendebetrieb erfolgt, nachdem wenigstens ein Ultraschallsensor (1, 1') ein einen Glasbruch anzeigendes Signal empfangen hat.

## Beschreibung

### Stand der Technik

Die Erfindung geht aus von einer Anordnung nach der Gattung des Hauptanspruchs. Eine aus der DE-PS 40 33 605 bekannte Anordnung dieser Art weist Zwei Paare von jeweils einem Ultraschallsender und einem Ultraschallempfänger auf, mittels derer der Innenraum eines Kraftfahrzeuges überwacht wird. Je ein Sender und ein Empfänger werden von einer gemeinsamen Elektronik abwechselnd wirksam gesetzt. Überwacht wird ein sich in dem Innenraum aufgrund der von den Ultraschallsendern abgegebenen Signale ausbildende Interferenzfeld, welches sich sowohl aufgrund eines Glasbruches wie auch aufgrund einer Bewegung innerhalb des Innenraums ändert. Durch ein spezielles Sende-/Auswerteverfahren werden Fehlalarme vermieden. Diese bekannte Anordnung sichert einen Innenraum gegen unerlaubtes Eindringen. In der Praxis hat sich jedoch gezeigt, daß Eindringlinge, in Kenntnis des Vorhandenseins eines Alarmsystems, zunehmend wie folgt vorgehen. Sie lösen zunächst durch Einschlagen einer in den gesicherten Innenraum führenden Scheibe bewußt einen Alarm aus, warten sodann das Ende der damit verbundenen Alarmsignale ab, beobachten dabei, ob von dem Alarm Notiz genommen wurde und dringen erst danach durch die zuvor zerstörte Scheibe in den Innenraum ein. Sofern nur ein einziges Alarmsystem vorhanden ist, das zuvor den Glasbruch detektiert hatte, reagiert es im allgemeinen auf ein zeitlich versetzt erfolgendes Eindringen nicht mehr.

Überwunden wird diese Schwierigkeit in einfacher Weise, indem neben einem einen Glasbruch detektierenden Sensor weiterhin noch ein von diesem unabhängig arbeitender Bewegungssensor verwendet wird. Eine beide Sensortypen aufweisende Anordnung ist aus der US-PS 50 79 538 bekannt. Allerdings sind die beiden Sensorarten bei dem aus dieser Schrift bekannten Vorschlag nur zur redundanten Erfassung einer möglichst großen Zahl von Anzeichen eines unzulässigen Eindringens eingesetzt. Ein Alarm wird einmal ausgelöst, wenn eine der beiden Sensorarten anspricht. Auch dieses System ist deshalb umgehbar, wenn ein Alarm zunächst bewußt ausgelöst und anschließend sein Ende abgewartet wird.

Der Erfindung liegt die Aufgabe zugrunde, eine sichere Anordnung zur Überwachung eines Raumes mit wenigstens einer Scheibe anzugeben.

Diese Aufgabe wird gelöst durch eine Anordnung mit den kennzeichnenden Merkmalen des Hauptanspruchs. Indem sie nach einmaligem Auslösen von einer Betriebsart zur Überwachung eines Glasbruches auf eine Betriebsart zur Überwachung auf Bewegungen im überwachten Raum wechselt, bietet sie eine erhöhte Sicherheit sowohl gegen einmaliges vorsätzliches Auslösen eines Alarms durch Einschlagen einer Scheibe wie auch allgemein gegen Fehlalarme. Die vorgeschlagene Anordnung besteht im wesentlichen aus zwei doppelt genutzten Ultraschallsensoren sowie einer Steuerelektronik. Ihre Installation in vorhandene Räume erfordert deshalb nur einen geringen Aufwand. Besonders vorteilhaft wird die vorgeschlagene Anordnung zur Sicherung von Kraftfahrzeugen in Verbindung mit einer Alarmanlage eingesetzt.

Ein Ausführungsbeispiel der Erfindung wird nachfolgend anhand der Zeichnung näher erläutert.

### Zeichnung

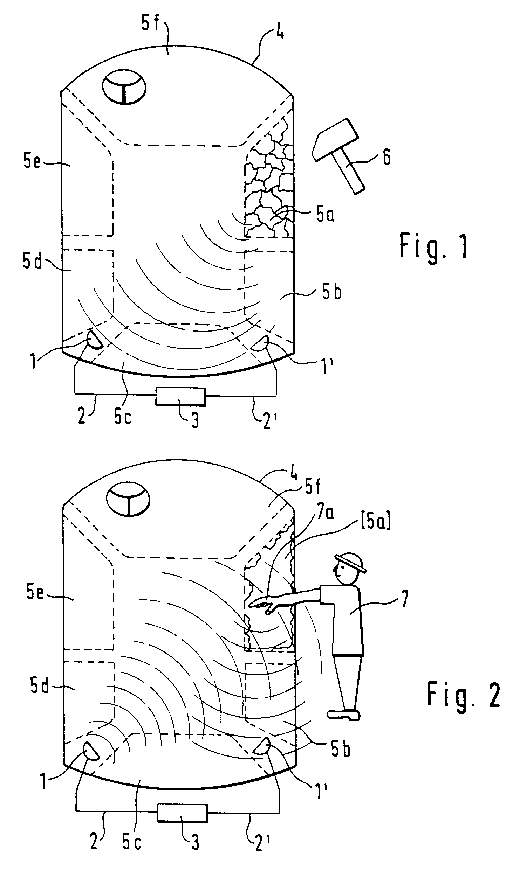

Die Figuren 1 und 2 veranschaulichen die vorgeschlagene Anordnung.

### Beschreibung des Ausführungsbeispiels

Figur 1 zeigt stark vereinfacht den Innenraum eines Kraftfahrzeuges mit einer Randkontur 4 sowie sechs durch gestrichelte Linien eingefaßte Scheiben 5a bis 5f in Draufsicht. Im hinteren Teil des Innenraums sind, als Hauptbestandteile der vorgeschlagenen Anordnung, zwei als Empfänger betriebene Ultraschallsensoren 1, 1' angeordnet, von denen wenigstens einer sowohl als Empfänger, wie auch als Sender betreibbar ist. Sie sind über Verbindungsleitungen 2, 2' mit einer Steuerelektronik 3 verbunden. Diese wiederum ist entweder selbst Teil der Steuerlogik einer nicht dargestellten Alarmanlage oder mit einer solchen verbunden. Die Sensoren 1, 1', bei denen es sich zweckmäßig um handelsübliche Ultraschallkapseln handelt, sind sinnvoll so angeordnet, daß sie an einer beliebigen Stelle des überwachten Innenraums bei einem Glasbruch entstehende Geräusche direkt empfangen können.

Die in der Figur 1 dargestellte Anordnung der Ultraschallsensoren 1, 1' im hinteren Teil des KfZ-Innenraums ist rein beispielhafter Natur. Ebenso können die Sensoren im vorderen Teil oder in der Mitte des Innenraums plaziert sein. Auch ist die Verwendung von mehr als zwei Sensoren ohne weiteres denkbar. Das Steuergerät 3 kann an beliebiger Stelle sowohl im Innenraum wie auch außerhalb des Innenraums plaziert sein. Ferner ist die vorgeschlagene Anordnung nicht auf eine Verwendung in Kraftfahrzeugen begrenzt, sondern kann ohne weiteres auch zur Überwachung von Gebäudeinnenräumen, zum Beispiel von Wintergärten eingesetzt werden.

Das Steuergerät 3 wertet die von den Ultraschallsensoren 1, 1' erhaltenen Signale aus und führt ferner das Umschalten von Empfangs auf Sendebetrieb aus.

Nachfolgend wird die Funktionsweise der Anordnung näher erläutert. Nach dem Aktivieren, d.h. in der Regel, nachdem eine Alarmanlage scharf geschaltet wurde, arbeitet die Überwachungseinrichtung zunächst im Standartbetrieb als Glasbruchmelder. Das Steuergerät 3 ist hierzu zweckmäßig mit einer auf Glasbruchgeräusche angepaßten Filtercharakteristik ausgerüstet, typischerweise umfaßt diese ein schmales Frequenzband im Bereich um 40 KHz. Entsteht in dieser Standartbetriebsart im überwachten Innenraum ein ein Glasbruch anzeigendes, bzw. in die Filtercharakteristik des Steuergerätes 3 fallendes Signal, zum Beispiel wie in Figur 1 dargestellt, durch Einschlagen der Scheibe 5a mit einem Hammer 6, wird dieses von den Ultraschallsensoren 1, 1' empfangen und dem Steuergerät 3 zugeführt. Stellt das Steuergerät 3 fest, daß das empfangene Signal in die Filtercharakteristik fällt und somit einen Glasbruch anzeigt, schaltet es wenigstens einen der Sensoren 1, 1' sofort oder nach Ablauf einer vorgegebenen kurzen Nachlaufzeit von Empfangs- auf Sendebetrieb. Der umgeschaltete Sensor, im Beispiel Figur 2 der Sensor 1, erzeugt nun Ultraschallsignale mit einer oder mehreren vorgegebenen Frequenzen. Sie sind in Figur 2 als Folge größer werdender Kreisabschnitte angedeutet. Die vom Sensor 1 erzeugten Signale sowie die aus dem Innenraum herrührenden Reflektionen dieser Signale empfängt der andere, weiterhin als Empfänger betriebene Ultraschallsensor 1'. Erfolgt in dieser Betriebsart im überwachten Innenraum eine Bewegung, zum Beispiel wie in Figur 2 dargestellt indem eine Person ihre Hand 7a in den Innenraum bringt, führt dies zu einer Dopplerverschiebung der Frequenz der von der Hand 7a reflektierten Signale gegenüber der Frequenz der vom Sender 1 abgegebenen Signale, welche von dem als Empfänger betriebenen Sensor 1' empfangen und vom Steuergerät 3 ausgewertet wird. Übersteigt die vom Steuergerät 3 festgestellte Dopplerverschiebung einen vorgegebenen Schwellwert, wird wiederum ein Alarm ausgelöst. Das Auslösen erfolgt dabei zweckmäßig unabhängig davon, ob aufgrund eines zuvor detektierten Glasbruches bereits einmal ein Alarm ausgelöst wurde.

## Patentansprüche

1. Anordnung zur Überwachung eines zumindest eine Scheibe aufweisenden Raumes, insbesondere Innenraumes, mit wenigstens zwei Ultraschallsensoren zum Empfang von bei einem Glasbruch entstehenden Signalen, dadurch gekennzeichnet, daß wenigstens einer der Ultraschallsensoren (1, 1') wahlweise als Ultraschallsender (1) betreibbar ist.

2. Anordnung nach Anspruch 1, dadurch gekennzeichnet, daß nach dem Umschalten eines ersten Ultraschallsensors (1, 1') als Sender wenigstens ein anderer Ultraschallsensor (1, 1') als Empfänger (1') zum Empfang der von dem auf Sendebetrieb geschalteten Ultraschallsensor (1) ausgehenden Ultraschallsignale betrieben wird.

3. Anordnung nach Anspruch 1, dadurch gekennzeichnet, daß ein Umschalten eines Sensors (1, 1') von Empfangs- auf Sendebetrieb erfolgt, nachdem wenigstens ein Ultraschallsensor (1, 1') ein einen Glasbruch anzeigendes Signal empfangen hat.

4. Anordnung nach Anspruch 1, dadurch gekennzeichnet, daß ein Steuergerät (3) vorgesehen ist, welches die von den Ultraschallsensoren (1, 1') empfangenen Signale auswertet und im Falle eines einen Glasbruch anzeigenden Signales das Umschalten eines Sensors (1, 1') von Empfangs- auf Sendebetrieb auslöst.

5. Anordnung nach Anspruch 4, dadurch gekennzeichnet, daß das Steuergerät (3) nach einem Umschalten die von dem als Empfänger betriebenen Sensor (1') empfangenen Signale auf Bewegungen in dem überwachten Innenraum auswertet.

6. Anordnung nach Anspruch 5, dadurch gekennzeichnet, daß das Steuergerät (3) die empfangenen Signale auf Dopplerverschiebungen hin auswertet.

7. Anordnung nach Anspruch 1, dadurch gekennzeichnet, daß der überwachte Innenraum der Innenraum eines Kraftfahrzeuges ist.
